(19) Europäisches Patentamt / European Patent Office / Office européen des brevets

(11) **EP 2 056 101 B1**

(12) **FASCICULE DE BREVET EUROPEEN**

(45) Date de publication et mention
de la délivrance du brevet:
**22.01.2014 Bulletin 2014/04**

(51) Int Cl.:
**G01N 27/49** *(2006.01)* **G01N 27/48** *(2006.01)*

(21) Numéro de dépôt: **08354069.0**

(22) Date de dépôt: **07.10.2008**

(54) **Potentiostat multi-voies ayant un potentiel de contre-électrode ajustable**

Mehrwege-Potentiostat mit einem anpassbaren Gegenelektrodenpotential

Multi-channel potentiostat with adjustable auxiliary electrode potential

(84) Etats contractants désignés:
**DE FR GB IT**

(30) Priorité: **02.11.2007 FR 0707720**

(43) Date de publication de la demande:
**06.05.2009 Bulletin 2009/19**

(73) Titulaire: **Commissariat à l'Énergie Atomique et aux Énergies Alternatives**
**75015 Paris (FR)**

(72) Inventeurs:
• **Bourgerette, Alain**
**F-38190 Villard Bonnot (FR)**
• **Marchand, Gilles**
**F-38119 Pierre-Châtel (FR)**

(74) Mandataire: **Hecké, Gérard et al**
**Cabinet Hecké**
**10, rue d'Arménie**
**Europole**
**BP 1537**
**38025 Grenoble Cedex 1 (FR)**

(56) Documents cités:
EP-A- 0 068 101     US-A- 4 315 753
US-A1- 2005 211 571

• ALEXANDER FREY ET AL: "Design of an integrated potentiostat circuit for CMOS bio sensor chips" PROCEEDINGS OF ISCAS, vol. V, 31 décembre 2003 (2003-12-31), pages 9-12, XP002482818

**Description**

**Domaine technique de l'invention**

L'invention est relative à un potentiostat multi-voies comportant une borne de référence, une borne de contre-électrode et au moins deux bornes de travail, respectivement destinées à être connectées à une électrode de référence, une contre-électrode et au moins deux électrodes de travail d'une cellule électrochimique, le potentiostat comportant des tensions de consigne prédéterminées et des premier et second circuits de régulation pour appliquer les tensions de consigne respectivement entre la première et la seconde borne de travail et la borne de référence.

**État de la technique**

Les cellules électrochimiques sont très couramment utilisées dans un très large spectre de domaines d'analyse. En règle générale, dans un dispositif d'analyse, une cellule électrochimique est associée à un potentiostat, qui assure deux fonctions essentielles. Il impose une différence de potentiel prédéterminée, c'est-à-dire une tension de consigne, entre une électrode de travail et une électrode de référence de la cellule électrochimique. Dans le même temps, le potentiostat mesure le courant qui circule entre l'électrode de travail et une contre-électrode de la cellule.

De multiples architectures de potentiostats existent selon la complexité des études et/ou des phénomènes à analyser. Il existe des potentiostats de type monovoie, associés à une seule électrode de travail et des potentiostats de type multi-voies associés à plusieurs électrodes de travail. Dans la catégorie des potentiostats multi-voies, on distingue les potentiostats des dispositifs d'analyse ayant une électrode de référence pour chaque électrode de travail et les potentiostats des dispositifs d'analyse ayant une seule électrode de référence pour plusieurs électrodes de travail, que le potentiostat soit utilisé avec une ou plusieurs cellules électrochimiques. A l'intérieur de la catégorie de dispositifs d'analyse ayant une électrode de référence pour plusieurs électrodes de travail, on peut également différencier les dispositifs dans lesquels la contre-électrode et l'électrode de référence sont réunies et les dispositifs dans lesquels ces électrodes sont séparées.

L'article de Frey et al. « Design of an Integrated Potentiostat Circuit for CMOS BIO Sensor Chips » Proceeding of ISCAS, vol. V, 2003, p9-12, décrit l'utilisation d'un potentiostat associé à deux électrodes de travail, une électrode de référence et une contre-électrode. Dans le dispositif d'analyse correspondant, la tension de l'électrode de référence est contrôlée au moyen d'un amplificateur opérationnel ayant une entrée connectée à l'électrode de référence et une sortie connectée à la contre-électrode, tandis que des tensions de consigne distinctes sont imposées aux deux électrodes de travail. Par ailleurs, ce dispositif a un intérêt limité car les tensions de consignes appliquées aux deux électrodes de travail sont nécessairement de signe contraire (l'une est positive alors que l'autre est négative).

Ce type de dispositifs multi-voies, avec une contre-électrode et une électrode de référence séparées, n'est pas en mesure d'étudier des mécanismes complexes, par exemple différentes espèces d'oxydo-réduction mélangées au sein d'un même électrolyte et pouvant réagir entre elles. Dans ce type de dispositif, la dynamique des tensions de sortie n'est pas optimisée vis-à-vis de la dynamique des tensions d'alimentations, ce qui limite leur intérêt.

**Objet de l'invention**

L'invention a pour but un potentiostat qui permet notamment de réaliser une voltampérométrie cyclique, en bénéficiant d'une dynamique de mesure optimisée.

Selon l'invention, ce but est atteint par les revendications annexées et plus particulièrement par le fait que le potentiostat comporte un circuit de contrôle de la tension de contre-électrode appliquée sur la borne de contre-électrode, ledit circuit de contrôle comportant une première borne d'entrée connectée à un potentiel prédéterminé et une deuxième borne d'entrée sur laquelle est appliquée une tension de régulation représentative d'au moins une des tensions des bornes de travail.

**Description sommaire des dessins**

D'autres avantages et caractéristiques ressortiront plus clairement de la description qui va suivre de modes particuliers de réalisation de l'invention donnés à titre d'exemples non limitatifs et représentés aux dessins annexés, dans lesquels :

La figure 1 représente, de façon schématique, un mode particulier de réalisation d'un potentiostat selon l'invention.
La figure 2 représente, plus en détail, un exemple de réalisation particulier d'un potentiostat selon l'invention.

**Description de modes de réalisation préférentiels de l'invention**

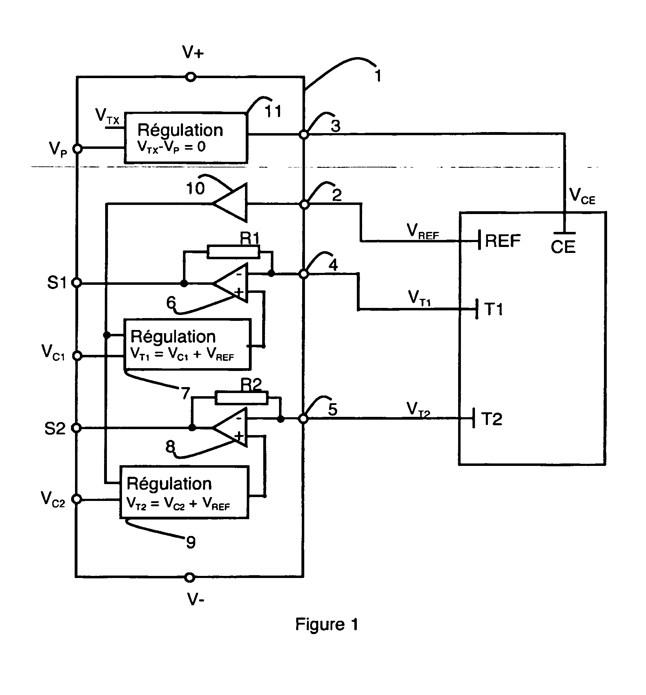

Comme illustré à la figure 1, le potentiostat 1 comporte une borne de référence 2, une borne de contre-électrode 3 et au moins deux bornes de travail, 4 et 5, respectivement destinées à être connectées à une électrode de référence REF, une contre-électrode CE et au moins deux électrodes de travail T1 et T2 d'une cellule électrochimique qui baignent toutes au sein d'un même électrolyte. Le potentiostat 1 est de type multi-voies car il présente plusieurs électrodes de travail pour une électrode de référence. Le potentiostat est alimenté par les tensions d'alimentation $V_+$ et $V_-$.

De manière conventionnelle, l'électrode de référence est portée à un potentiel de référence $V_{REF}$, chaque électrode de travail à un potentiel de travail distinct, respectivement $V_{T1}$ et $V_{T2}$, et la contre-électrode à un potentiel de contre-électrode $V_{CE}$.

Le potentiostat 1 permet d'appliquer une tension de consigne prédéterminée, respectivement $V_{C1}$ et $V_{C2}$, entre une des bornes de travail 4, 5 et la borne de référence 2. Chaque électrode de travail a donc un potentiel de travail ($V_{T1}$, $V_{T2}$) qui lui est propre et qui dépend de la tension de consigne qui lui est assignée et du potentiel de l'électrode de référence.

La borne de référence 2 est connectée, de préférence, par l'intermédiaire d'un montage suiveur 10, à une première borne d'entrée de deux circuits de régulation 7 et 9, respectivement associés aux bornes de travail 4 et 5. Chaque circuit de régulation possède également une seconde borne d'entrée connectée à une borne de consigne correspondante, sur laquelle est appliquée la tension de consigne, $V_{C1}$ ou $V_{C2}$, associée. Les circuits de régulation 7, 9 permettent ainsi d'appliquer une tension de consigne prédéterminée, $V_{C1}$ ou $V_{C2}$, entre chaque borne de travail 4, 5 et la borne de référence, de manière à ce que :

$$V_{T1} = V_{C1} + V_{REF}$$

$$V_{T2} = V_{C2} + V_{REF}$$

Dans le mode de réalisation particulier illustré à la figure 1, l'entrée inverseuse d'un premier amplificateur opérationnel de mesure 6 est connectée à la borne de travail 4 et, par l'intermédiaire d'une résistance R1, à la sortie de l'amplificateur opérationnel 6, qui est connectée à une première sortie de mesure S1 du potentiostat. L'entrée non inverseuse de l'amplificateur opérationnel 6 est connectée à la sortie du premier circuit de régulation 7.

De manière analogue, l'entrée inverseuse d'un second amplificateur opérationnel de mesure 8 est connectée à la borne de travail 5 et, par l'intermédiaire d'une résistance R2, à la sortie de l'amplificateur opérationnel 8, qui est connectée à une seconde sortie de mesure S2 du potentiostat. L'entrée non inverseuse de l'amplificateur opérationnel 8 est connectée à la sortie du second circuit de régulation 9.

Ce montage permet donc de fixer les potentiels des deux électrodes de travail (T1, T2) indépendamment l'une de l'autre, de manière à ce que la différence de potentiel entre une des électrodes de travail et l'électrode de référence soit déterminée par la tension de consigne correspondante ($V_{C1}$, $V_{C2}$). Les tensions de consignes ($V_{C1}$, $V_{C2}$) sont donc indépendantes les unes les autres.

De plus, ce montage permet d'obtenir sur les sorties de mesure S1 et S2 des signaux représentatifs de la valeur des courants qui traversent les deux électrodes de travail (T1, T2). Les tensions maximales (VSmax) et minimales (VSmin) qui peuvent être obtenues sur les sorties S1 et S2 définissent pour chacune des sorties la dynamique de mesure VSmax-VSmin.

Le potentiostat 1 permet également, par un circuit 11 de contrôle de la tension de contre électrode, de fixer le potentiel de contre-électrode $V_{CE}$ de manière à déplacer, par exemple, le potentiel d'une électrode de travail ou la moyenne des potentiels des électrodes de travail vers un potentiel prédéterminé $V_P$. Ainsi, il est possible de faire évoluer le potentiel des bornes de travail (4, 5) et donc des électrodes de travail $V_{T1}$, $V_{T2}$, par l'intermédiaire de la contre-électrode et ainsi d'accroître la dynamique de mesure. Le potentiel $V_P$ peut être, par exemple, la masse ou avantageusement la moyenne des tensions d'alimentation du potentionstat, ou encore plus avantageusement la moyenne des tensions limites de la fenêtre électrochimique de l'électrolyte. Par ailleurs, le potentiel prédéterminé $V_P$ peut également être un potentiel qui est fixé au moyen d'une borne supplémentaire du potentiostat 1 comme pour les potentiels $V_{C1}$ et $V_{C2}$.

Le potentiel de contre-électrode $V_{CE}$, associé à la borne de contre-électrode 3, est fixé par la sortie du circuit 11 de contrôle, qui comporte une première borne d'entrée connectée au potentiel $V_P$ et une deuxième borne d'entrée sur laquelle est appliquée une tension de régulation $V_{TX}$ représentative d'au moins une des tensions ($V_{T1}$, $V_{T2}$) des bornes de travail (4, 5). La tension de régulation $V_{TX}$, peut être constituée par une tension appliquée à une borne de travail ou une combinaison des différentes tensions appliquées aux bornes de travail, par exemple la moyenne des tensions appliquées aux bornes de travail. Le circuit 11 de contrôle régule la tension de contre-électrode $V_{CE}$ de manière à ce que $V_{TX}$ - $V_P$ = 0. Pratiquement, le circuit 11 de contrôle, a une première borne d'entrée connectée au potentiel $V_P$ et une deuxième borne d'entrée connectée à la sortie d'au moins un des circuits de régulation 7 et 9. Ainsi, le potentiel prédéterminé $V_P$ est un potentiel vers lequel on maintient, par pilotage du potentiel de la contre-électrode $V_{CE}$, le potentiel d'une électrode de travail ou d'une combinaison des potentiels des électrodes de travail, par exemple la moyenne des potentiels des électrodes de travail.

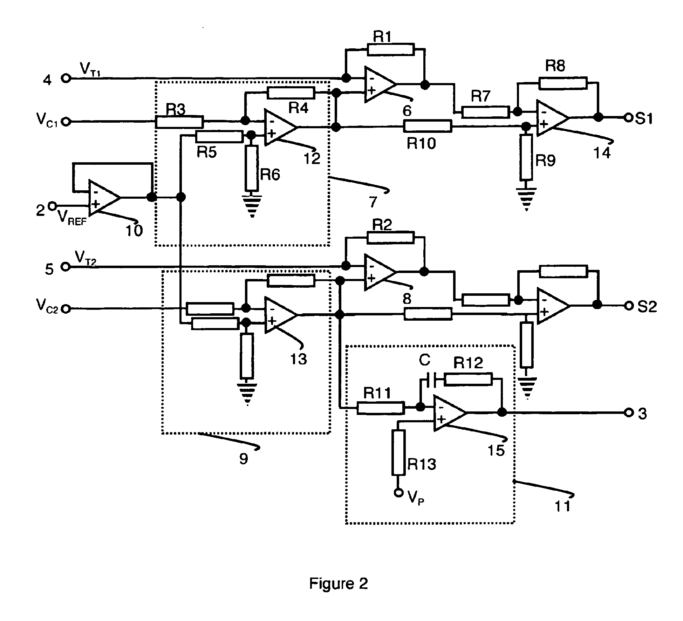

Dans une première variante, on peut chercher à faire tendre le potentiel de la seconde électrode de travail T2 vers le potentiel $V_P$ ($V_{T2}$ - $V_P$ = 0). La tension de régulation $V_{TX}$ est alors constituée par la tension de travail $V_{T2}$ appliquée à la borne de travail 5 associée. De cette manière, le potentiel de contre-électrode $V_{CE}$ est modulé pour que le potentiel de la deuxième électrode de travail $V_{T2}$ tende vers le potentiel $V_P$. Pratiquement, la deuxième borne du circuit 11 de contrôle est alors, de préférence, connectée à la sortie du circuit 9 de régulation (figure 2).

De manière analogue, dans une seconde variante, on peut chercher à faire tendre le potentiel de la première électrode de travail T1 vers le potentiel $V_P$ ($V_{T1} - V_P = 0$). La tension de régulation $V_{TX}$ est alors constituée par la tension de travail $V_{T1}$ appliquée à la borne de travail 4 associée. De cette manière, le potentiel de contre-électrode $V_{CE}$ est modulé pour que le potentiel de la première électrode de travail $V_{T1}$ tende vers le potentiel $V_P$. Pratiquement, la deuxième borne du circuit 11 de contrôle est alors, de préférence, connectée à la sortie du circuit 7 de régulation.

Dans une troisième variante, on peut chercher à placer le potentiel $V_P$ de manière équipotentielle entre les potentiels de bornes de travail 4, 5. La tension de régulation $V_{TX}$ est alors constituée par la moyenne des tensions $V_{T1}$ et $V_{T2}$ appliquées aux bornes de travail 4 et 5.

En pratique, la deuxième borne du circuit 11 de contrôle est avantageusement connectée à la sortie du ou des circuits de régulation 7, 9 associés à l'électrode ou à la pluralité d'électrode dont le potentiel est à faire tendre vers le potentiel $V_P$.

Comme illustré à la figure 2, chaque circuit de régulation 7, 9 comporte avantageusement un amplificateur opérationnel 12, 13 monté en sommateur. Dans le mode de réalisation particulier illustré à la figure 2, l'entrée inverseuse de l'amplificateur opérationnel 12 est connectée à la borne de consigne correspondante ($V_{C1}$) par l'intermédiaire d'une résistance R3 et à la sortie de l'amplificateur opérationnel 12 par une résistance R4. L'entrée non inverseuse de l'amplificateur opérationnel 12 est connectée, par l'intermédiaire d'une résistance R5, à la sortie du montage suiveur 10 connecté à la borne de référence 2, et à la masse par l'intermédiaire d'une résistance R6. Ainsi, le potentiel appliqué à la sortie de l'amplificateur opérationnel 12, c'est-à-dire à la sortie du circuit de régulation 7, est fonction du potentiel de référence $V_{REF}$ et de la tension de consigne $V_{C1}$ correspondante.

De manière analogue, le montage du circuit de régulation 9 permet de fixer le potentiel $V_{T2}$ de l'électrode de travail T2 correspondante en fonction de la tension de consigne $V_{C2}$ correspondante.

De plus, sur la figure 2, la sortie de l'amplificateur opérationnel 6 est, avantageusement, connectée, par l'intermédiaire d'une résistance R7, à la borne d'entrée inverseuse d'un amplificateur opérationnel 14, qui est monté en contre-réaction au moyen d'une résistance R8 et dont la sortie est connectée à la sortie de mesure S1. Ainsi, la résistance R8 connecte l'entrée inverseuse et la sortie de l'amplificateur opérationnel 14. L'entrée non inverseuse de l'amplificateur opérationnel 14 est connectée à la masse, par l'intermédiaire d'une résistance R9, et à la sortie de l'amplificateur opérationnel 12 au moyen d'une résistance R10. Ainsi, l'amplificateur opérationnel 14 permet d'obtenir sur la sortie de mesure S1 une tension représentative de la valeur du courant qui traverse l'électrode de travail T1.

Un montage analogue peut être réalisé à partir des sorties des amplificateurs opérationnels 8 et 13 pour obtenir sur la sortie de mesure S2 une tension représentative de la valeur du courant qui traverse l'électrode de travail T2.

Dans le mode de réalisation particulier illustré sur la figure 2, le circuit 11 de contrôle de la tension de contre-électrode $V_{CE}$ comporte un amplificateur opérationnel 15 qui a une entrée inverseuse connectée à la sortie de l'amplificateur opérationnel 13, par l'intermédiaire d'une résistance R11. Cette entrée inverseuse est également connectée à la sortie de l'amplificateur opérationnel 15, par l'intermédiaire d'une résistance R12 et d'une capacité C montées en série. L'entrée non inverseuse de l'amplificateur opérationnel 15 est reliée au potentiel $V_P$ par l'intermédiaire d'une résistance R13. Ainsi, le circuit 11 de contrôle de la tension de contre-électrode est constitué par un amplificateur opérationnel 15 ayant une entrée inverseuse qui constitue la deuxième borne d'entrée du circuit 11 de contrôle et une entrée non-inverseuse qui constitue la première borne d'entrée du circuit 11 de contrôle. Dans ce mode de réalisation particulier, la tension de régulation $V_{TX}$ est constituée par la tension de travail $V_{T2}$ appliquée à la borne de travail 5 et le potentiel de contre-électrode $V_{CE}$ est fixé de façon à faire tendre le potentiel de la seconde électrode de travail $V_{T2}$ vers le potentiel $V_P$ ($V_{T2} - V_P = 0$).

Dans une variante, non représentée, pour faire tendre le potentiel de la première électrode de travail $V_{T1}$ vers le potentiel $V_P$ ($V_{T1} - V_P = 0$), l'entrée inverseuse de l'amplificateur opérationnel 15 est connectée à la sortie de l'amplificateur opérationnel 12.

Dans une troisième variante, non représentée, les sorties des amplificateurs opérationnels 12 et 13 sont connectées aux entrées d'un sommateur, ayant sa sortie connectée à l'entrée inverseuse de l'amplificateur opérationnel 15. Dans ce cas $V_{TX} = (V_{T1} + V_{T2})/2$. Le potentiel de contre-électrode $V_{CE}$ est alors fixé pour placer le potentiel $V_P$ de manière équipotentielle entre les potentiels des deux électrodes de travail T1 et T2.

De cette manière, le potentiostat selon l'invention permet de piloter la potentiel de la contre-électrode ce qui autorise une optimisation de la dynamique des tensions de sortie vis-à-vis de la dynamique des tensions d'alimentation du potentiostat. Cette approche peut être particulièrement intéressante s'il existe une contrainte sur les tensions d'alimentation.

De plus, le potentiostat permet d'appliquer des tensions de consignes indépendantes entre les électrodes de travail et l'électrode de référence ce qui rend possible l'application simultanée d'une tension de consigne positive entre une électrode de travail et l'électrode de référence et une tension de consigne négative entre une autre électrode de travail et l'électrode de référence.

**Revendications**

1. Potentiostat multi-voies comportant une borne de référence (2), une borne de contre-électrode (3) et au moins deux bornes de travail (4, 5), respectivement destinées à être connectées à une électrode de référence (REF), une contre-électrode (CE) et au moins deux électrodes de travail (T1, T2) d'une cellule électrochimique, le potentiostat (1) comportant des tensions de consigne prédéterminées ($V_{C1}$, $V_{C2}$) et des premier et second circuits (7, 9) de régulation pour appliquer les tensions de consigne entre la borne de référence (2) et respectivement la première et la seconde borne de travail (4, 5), potentiostat **caractérisé en ce qu'**il comporte un circuit (11) de contrôle de la tension de contre-électrode ($V_{CE}$) appliquée sur la borne de contre-électrode (3), ledit circuit (11) de contrôle comportant une première borne d'entrée connectée à un potentiel prédéterminé ($V_P$) et une deuxième borne d'entrée sur laquelle est appliquée une tension ($V_{TX}$) de régulation représentative d'au moins une des tensions ($V_{T1}$, $V_{T2}$) des bornes de travail (4, 5).

2. Potentiostat selon la revendication 1, **caractérisé en ce que** le potentiel prédéterminé ($V_P$) est la masse.

3. Potentiostat selon la revendication 1, **caractérisé en ce que** le potentiel prédéterminé ($V_P$) est la moyenne des tensions d'alimentation d'alimentation du potentiostat.

4. Potentiostat selon la revendication 1, **caractérisé en ce que** le potentiel prédéterminé ($V_P$) est la moyenne des tensions limites de la fenêtre électrochimique de l'électrolyte.

5. Potentiostat selon l'une quelconque des revendications 1 à 4, **caractérisé en ce que** les tensions de consignes ($V_{C1}$, $V_{C2}$) sont indépendantes les unes des autres.

6. Potentiostat selon l'une quelconque des revendications 1 à 5, **caractérisé en ce que** la tension ($V_{TX}$) de régulation est constituée par une combinaison des tensions ($V_{T1}$, $V_{T2}$) appliquées aux bornes de travail (4, 5).

7. Potentiostat selon l'une quelconque des revendications 1 à 6, **caractérisé en ce que** la tension ($V_{TX}$) de régulation est constituée par la moyenne des tensions ($V_{T1}$, $V_{T2}$) appliquées aux bornes de travail (4, 5).

8. Potentiostat selon l'une quelconque des revendications 1 à 5, **caractérisé en ce que** la tension ($V_{TX}$) de régulation est constituée par la tension de travail ($V_{T1}$, $V_{T2}$) appliquée à une des bornes de travail (4, 5).

9. Potentiostat selon l'une quelconque des revendications 1 à 8, **caractérisé en ce que** les circuits (7, 9) de régulation comportent une première entrée connectée à la borne de référence, une seconde entrée connectée à la borne de consigne correspondante, et une sortie connectée à une entrée d'un amplificateur opérationnel de mesure (6, 8), qui a une seconde entrée connectée à la borne de travail (4, 5) correspondante.

10. Potentiostat selon la revendication 9, **caractérisé en ce que** le circuit (11) de contrôle de la tension de contre-électrode est constitué par un amplificateur opérationnel (15) ayant une entrée inverseuse constituant la deuxième borne d'entrée du circuit (11) de contrôle et une entrée non-inverseuse constituant la première borne d'entrée du circuit (11) de contrôle.

**Patentansprüche**

1. Mehrwege-Potentiostat, umfassend einen Referenzanschluss (2), einen Gegenelektrodenanschluss (3) und wenigstens zwei Arbeitsanschlüsse (4, 5), die dazu bestimmt sind, mit einer Referenzelektrode (REF), einer Gegenelektrode (CE) bzw. wenigstens zwei Arbeitselektroden (T1, T2) einer elektrochemischen Zelle verbunden zu werden, wobei das Potentiostat (1) vorbestimmte Sollspannungen ($V_{C1}$, $V_{C2}$) sowie einen ersten und einen zweiten Regelkreis (7, 9) umfasst, um die Sollspannungen zwischen dem Referenzanschluss (2) und dem ersten bzw. dem zweiten Arbeitsanschluss (4, 5) anzulegen, Potentiostat, welches **dadurch gekennzeichnet ist, dass** es einen Kreis (11) zur Steuerung der an den Gegenelektrodenanschluss (3) angelegten Gegenelektrodenspannung ($V_{CE}$) umfasst, wobei der Steuerkreis (11) einen ersten Eingangsanschluss, der mit einem vorbestimmten Potential (Vp) verbunden ist, und einen zweiten Eingangsanschluss umfasst, an den eine Regelspannung ($V_{TX}$) angelegt ist, die für wenigstens eine der Spannungen ($V_{T1}$, $V_{T2}$) der Arbeitsanschlüsse (4, 5) repräsentativ ist.

2. Potentiostat nach Anspruch 1, **dadurch gekennzeichnet, dass** das vorbestimmte Potential ($V_P$) die Masse ist.

3. Potentiostat nach Anspruch 1, **dadurch gekennzeichnet, dass** das vorbestimmte Potential (Vp) der Mittelwert der Speisespannungen zur Versorgung des Potentiostats ist.

4. Potentiostat nach Anspruch 1, **dadurch gekennzeichnet, dass** das vorbestimmte Potential (Vp) der Mittelwert der Grenzspannungen des elektrochemischen Fensters des Elektrolyten ist.

**5.** Potentiostat nach einem der Ansprüche 1 bis 4, **dadurch gekennzeichnet, dass** die Sollspannungen ($V_{C1}$, $V_{C2}$) voneinander unabhängig sind.

**6.** Potentiostat nach einem der Ansprüche 1 bis 5, **dadurch gekennzeichnet, dass** die Regelspannung ($V_{TX}$) von einer Kombination aus den an die Arbeitsanschlüsse (4, 5) angelegten Spannungen ($V_{T1}$, $V_{T2}$) gebildet ist.

**7.** Potentiostat nach einem der Ansprüche 1 bis 6, **dadurch gekennzeichnet, dass** die Regelspannung ($V_{TX}$) von dem Mittelwert der an die Arbeitsanschlüsse (4, 5) angelegten Spannungen ($V_{T1}$, $V_{T2}$) gebildet ist.

**8.** Potentiostat nach einem der Ansprüche 1 bis 5, **dadurch gekennzeichnet, dass** die Regelspannung ($V_{TX}$) von der an einen der Arbeitsanschlüsse (4, 5) angelegten Arbeitsspannung ($V_{T1}$, $V_{T2}$) gebildet ist.

**9.** Potentiostat nach einem der Ansprüche 1 bis 8, **dadurch gekennzeichnet, dass** die Regelkreise (7, 9) einen ersten Eingang, der mit dem Referenzanschluss verbunden ist, einen zweiten Eingang, der mit dem entsprechenden Sollanschluss verbunden ist, und einen Ausgang umfassen, der mit einem Eingang eines Operationsmessverstärkers (6, 8) verbunden ist, welcher einen mit dem entsprechenden Arbeitsanschluss (4, 5) verbundenen zweiten Eingang aufweist.

**10.** Potentiostat nach Anspruch 9, **dadurch gekennzeichnet, dass** der Kreis (11) zur Steuerung der Gegenelektrodenspannung von einem Operationsverstärker (15) gebildet ist, der einen invertierenden Eingang, welcher den zweiten Eingangsanschluss des Steuerkreises (11) bildet, und einen nichtinvertierenden Eingang, welcher den ersten Eingangsanschluss des Steuerkreises (11) bildet, aufweist.

**Claims**

**1.** A muftichannel potentiostat comprising a reference terminal (2), a counter-electrode terminal (3) and at least two working terminals (4, 5) respectively designed to be connected to a reference electrode (REF), a counter-electrode (CE) and at least two working electrodes (T1, T2) of an electrochemical cell, the potentiostat comprising predefined setpoint voltages ($V_{C1}$, $V_{C2}$) and first and second regulating circuits (7, 9) to apply setpoint voltages respectively between the first and second work terminal (4, 5) and the reference terminal (2), a potentiostat **characterized in that** it comprises a control circuit (11) of the counter-electrode voltage ($V_{CE}$) applied to the counter-electrode terminal (3), said control circuit (11) comprising a first input terminal connected to a predefined potential ($V_P$) and a second input terminal to which a regulating voltage ($V_{TX}$) representative of at least one of the voltages ($V_{T1}$, $V_{T2}$) of the work terminals (4, 5) is applied.

**2.** The potentiostat according to claim 1, **characterized in that** the predefined potential ($V_P$) is ground.

**3.** The potentiostat according to claim 1, **characterized in that** the predefined potential ($V_P$) is the mean of the potentiostat supply voltages.

**4.** The potentiostat according to claim 1, **characterized in that** the predefined potential ($V_P$) is the mean of the limit voltages of the electrochemical window of the electrolyte.

**5.** The potentiostat according to anyone of the claims 1 to 4, **characterized in that** the setpoint voltages ($V_{C1}$, $V_{C2}$) are independent from one another.

**6.** The potentiostat according to anyone of the claims 1 to 5, **characterized in that** the regulating voltage ($V_{TX}$) is formed by a combination of the voltages ($V_{T1}$, $V_{T2}$) applied to the working terminals (4, 5).

**7.** The potentiostat according to anyone of the claims 1 to 6, **characterized in that** the regulating voltage ($V_{TX}$) is formed by the mean of the voltages ($V_{T1}$, $V_{T2}$) applied to the working terminals (4, 5).

**8.** The potentiostat according to anyone of the claims 1 to 5, **characterized in that** the regulating voltage (VTX) is formed by the working voltage ($V_{T1}$, $V_{T2}$) applied to one of the working terminals (4, 5).

**9.** The potentiostat according to anyone of the claims 1 to 8, **characterized in that** the regulating circuits (7, 9) comprise a first input connected to the reference terminal, a second input connected to the corresponding setpoint terminal, and an output connected to an input of a measuring operational amplifier (6, 8) which has a second input connected to the corresponding working terminal (4, 5).

**10.** The potentiostat according to claim 9, **characterized in that** the counter-electrode voltage control circuit (11) is formed by an operational amplifier (15) having an inverting input forming the second input terminal of the control circuit (11) and a non-inverting input forming the first input terminal of the control circuit (11).

Figure 1

Figure 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **FREY et al.** Design of an Integrated Potentiostat Circuit for CMOS BIO Sensor Chips. *Proceeding of IS-CAS,* vol. 2003, 9-12